# EUROPÄISCHE PATENTSCHRIFT

(11) **EP 2 449 659 B1**
(45) Veröffentlichungstag und Bekanntmachung des Hinweises auf die Patenterteilung: **22.01.2014**
(21) Anmeldenummer: 10718569.6
(22) Anmeldetag: 03.05.2010
(51) Int. Cl.: H02K 15/03, H02K 5/04, H02K 1/17, H02K 23/04

(54) **VERFAHREN ZUR HERSTELLUNG EINES ELEKTROMOTORS**
METHOD FOR MANUFACTURING AN ELECTRIC MOTOR
PROCÉDÉ DE FABRICATION D'UN MOTEUR ÉLECTRIQUE

(30) Priorität: 01.07.2009 DE 102009027370
(43) Veröffentlichungstag der Anmeldung: 09.05.2012
(73) Patentinhaber: Robert Bosch GmbH, 70442 Stuttgart (DE)
(72) Erfinder: OBERLE, Hans-Juergen, 76437 Rastatt (DE); SCHWENDEMANN, Franz, 77833 Ottersweier (DE); BRAUN, Wilhelm, 77815 Buehl (DE); MILI, Mohamed, 76133 Karlsruhe (DE)
(86) Internationale Anmeldenummer: PCT/EP2010/055949
(87) Internationale Veröffentlichungsnummer: WO 2011/000604

(56) Entgegenhaltungen:
- DE-A1- 2 411 621
- DE-A1-102006 056 163
- DE-B- 1 259 450
- US-A1- 2002 074 867

## Beschreibung

### Stand der Technik

Die vorliegende Erfindung betrifft ein Verfahren zur Herstellung eines Elektromotors sowie einen Elektromotor, ausgebildet als Verstellmotor zur Anwendung in der Kraftfahrzeugtechnik.

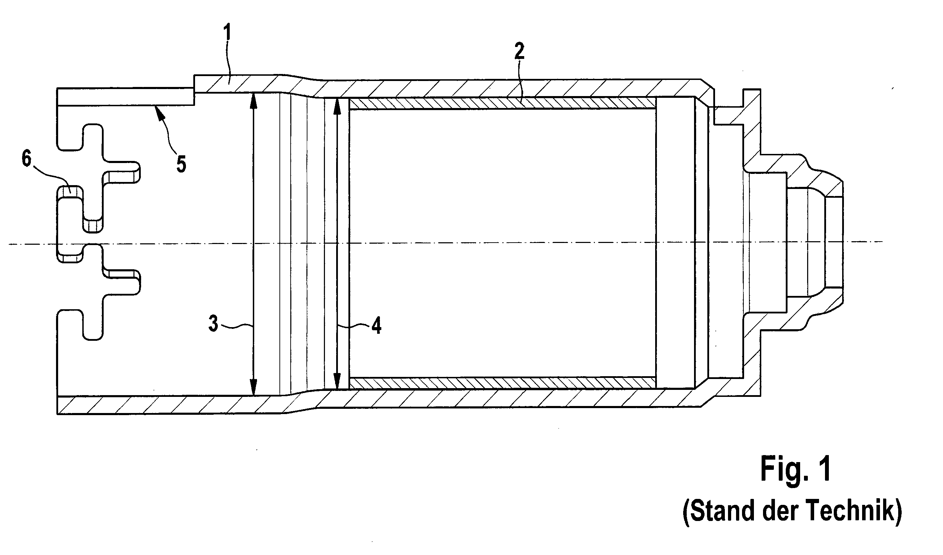

Figur 1 zeigt ein Polgehäuse, wie es in Elektromotoren nach dem Stand der Technik vorkommt. Dabei ist ein tiefgezogenes Gehäuse 1 mit einem eingesetzten ringförmigen Magneten 2 zu sehen. Des Weiteren zeigt Figur 1 stirnseitige Ausnehmungen 6, bei deren Ausstanzen ein innenliegender Grat 5 entstanden ist. Da das tiefgezogene Gehäuse 1 relativ kleinbauend ist, können die stirnseitigen Ausnehmungen 6 nur von außen nach innen ausgestanzt werden, wodurch der Grat 5 auf der Innenseite auftritt. Um den ringförmigen Magneten 2 nun trotz des innenliegenden Grates 5 montieren zu können, muss das tiefgezogene Gehäuse 1 zumindest zwei Durchmesser aufweisen, nämlich einen ersten Innendurchmesser 3 und einen kleineren zweiten Innendurchmesser 4. Dieses tiefgezogene Gehäuse 1 nach dem Stand der Technik muss also im Bereich der innenliegenden Grate 5 den größeren ersten Innendurchmesser 3 aufweisen, so dass der ringförmige Magnet 2 beim Einpressen nicht beschädigt wird und keinen Abrieb verursacht. Solch ein Abrieb könnte sich sonst im Motor festsetzen.

Mit der DE1259450B ist ein Kleinmotor bekannt geworden, bei dem ein Ringmagnet in einem Gehäuse aufgenommen ist, das aus einem gebogenen Blech geformt ist.

### Offenbarung der Erfindung

Das erfindungsgemäße Verfahren zur Herstellung eines Elektromotors mit den Merkmalen des Anspruchs 1 ermöglicht es, einen sehr viel kostengünstigeren Elektromotor herzustellen. Dies wird insbesondere durch geringeren Materialeinsatz, günstigere Materialien, weniger Fertigungsschritte sowie den Einsatz kostengünstigerer Werkzeuge erreicht. Des Weiteren lässt das erfindungsgemäße Verfahren mehr Freiheit bei dem Design und der Ausgestaltung des Elektromotors, insbesondere des Polrohrs. All diese Vorteile werden erreicht durch das erfindungsgemäße Verfahren zur Herstellung eines Elektromotors, umfassend die folgenden Schritte:
- Bereitstellen einer Mantelfläche eines Polrohrs des Elektromotors,
- Formen des Polrohrs durch Einrollen der Mantelfläche, und
- Einsetzen eines dünnwandigen Ringmagneten in das Polrohr, so dass ein Außenumfang des Ringmagneten an einem Innenumfang des Polrohrs anliegt.

Unter einem Ringmagneten versteht man einen Magneten mit geschlossener Ringform. Der Ringmagnet ist insbesondere zylinderförmig und im Vergleich zu seinem Gesamtdurchmesser ist seine Wandstärke äußerst dünnwandig. Die Mantelfläche ist nicht nur eine zweidimensionale Fläche, sondern weist natürlich auch eine Stärke, insbesondere Blechstärke, auf. Entscheidend ist, dass das Polrohr zunächst in einem ebenen Zustand bereitgestellt wird. In diesem Zustand, vor dem Einrollen, liegt das Polrohr als "Mantelfläche" vor.

Des Weiteren ist es von Vorteil, dass eine Wandstärke des Ringmagneten dünner ist als eine Wandstärke des Polrohrs. Dies verdeutlicht nochmals, dass der Ringmagnet äußerst dünnwandig ausgeführt ist und somit das erfindungsgemäße Verfahren eine äußerst große Flexibilität in Hinsicht auf Design und kompakte Bauweise des Elektromotors gibt. Als Herstellungsmethode wird die Mantelfläche, also das noch ungerollte Polrohr, durch Stanzen hergestellt. Das Polrohr wird insbesondere aus einem Stahlblech gestanzt. Es wird eine Stanzrichtung so gesetzt, dass ein Grat, welcher bei dem Stanzen entsteht, lediglich auf einer Außenseite des Polrohrs entsteht. Im Gegensatz zu dem tiefgezogenen Gehäuse nach dem Stand der Technik kann in dem erfindungsgemäßen Verfahren jeglicher Stanzprozess vor dem Formen des Polrohrs vollzogen werden. Dadurch kann auch eine Stanzrichtung beliebig gesetzt werden, so dass ein entstehender Grat beim Einsetzen des dünnwandigen Ringmagneten nicht störend entgegensteht.

Die Unteransprüche zeigen bevorzugte Weiterbildungen der Erfindung.

In vorteilhafter Ausgestaltung des erfindungsgemäßen Verfahrens ist vorgesehen, dass das Polrohr beidseitig offen ist und über seine gesamte Länge einen einheitlichen Innendurchmesser aufweist. Durch den einheitlichen Innendurchmesser kann der dünnwandige Ringmagnet ohne Beschädigung oder Abrieb in das gerollte Polrohr montiert werden.

Alternativ bevorzugt weist das gerollte Polrohr über seine Länge unterschiedliche Durchmesser auf. So kann das Polrohr außerhalb des Anlagebereichs des Magneten auch aufgeweitet sein, um den Magneten vorzufügen bzw. zu positionieren.

Ferner bevorzugt ist es, dass der dünnwandige Ringmagnet eingepresst und/oder eingeklebt wird.

In weiterer vorteilhafter Ausgestaltung des erfindungsgemäßen Verfahrens wird die Mantelfläche derart gerollt, dass das Polrohr auf Stoß, d.h., ohne Überlappung der Mantelfläche, geformt wird. Die Ausdehnung der gestanzten Mantelflächen entspricht also in eine Richtung genau dem Umfang des zu formenden Polrohrs, so dass das Polrohr ohne Überlappung der Mantelfläche, auf Stoß, geformt werden kann. Dadurch wird der Materialeinsatz minimiert und es entsteht ein durchgehend einheitlicher Innenumfang des Polrohrs.

In weiterer vorteilhafter Ausgestaltung ist vorgesehen, dass an den beiden, den Stoß bildenden Seiten der Mantelfläche, komplementäre Hinterschneidungen für eine formschlüssige Verbindung der beiden Seiten ausgestanzt werden. Durch solch komplementäre Hinterschneidungen, insbesondere mit puzzleförmiger Ausgestaltung, kann der Stoß der gerollten Mantelfläche mittels Formschluss gesichert werden. Alternativ oder zusätzlich ist vorteilhafterweise auch eine Klebung und/oder Schweißung und/oder Lötung des Stoßes vorgesehen.

In weiterer bevorzugter Gestaltung wird aus der Mantelfläche zumindest ein stirnseitiges Anschlusselement vor dem Einrollen ausgestanzt. Bevorzugt werden solche Anschlusselemente beidseitig des Polrohrs vorgesehen. Dadurch, dass diese Anschlusselemente vor dem Einrollen ausgestanzt werden, werden die Stanzrichtung und somit die Ausrichtung des Grates frei wählbar.

Ferner bevorzugt ist es, einen Deckel oder Lagerdeckel stirnseitig auf das Polrohr aufzusetzen. Insbesondere werden Deckel und/oder Lagerdeckel beidseitig des Polrohrs stirnseitig aufgesetzt. Das erfindungsgemäße Verfahren erlaubt hier eine sehr große Flexibilität, da das gerollte Polrohr beidseitig offen ist und somit beidseitig verschiedenste Deckel oder Lagerdeckel, insbesondere aus kostengünstigem und leichtem Kunststoff, aufgesetzt werden können. Im tiefgezogenen Gehäuse gemäß Stand der Technik war dies nicht möglich, da hier herstellungsbedingt immer eine Stirnseite durch den Boden des Tiefziehprozesses vorgegeben war. Insbesondere der Einsatz von Kunststoffdeckeln und/oder Kunststofflagerdeckeln führt zur Gewichtsreduzierung des Elektromotors und erhöht die Flexibilität im Design des Elektromotors.

Die Erfindung umfasst des Weiteren einen Elektromotor, ausgebildet als Stellmotor zur Anwendung in der Kraftfahrzeugtechnik, hergestellt nach dem soeben beschriebenen erfindungsgemäßen Verfahren. Die vorteilhaften Ausgestaltungen, wie sie in Verbindung mit dem erfindungsgemäßen Verfahren bereits diskutiert wurden, finden selbstverständlich auch auf den erfindungsgemäßen Elektromotor entsprechend Anwendung. Insbesondere findet der erfindungsgemäße Elektromotor vorteilhafte Anwendung als Sitzverstellmotor in einem Kraftfahrzeug.

### Kurze Beschreibung der Zeichnung

Nachfolgend wird ein Ausführungsbeispiel der Erfindung unter Bezugnahme auf die begleitende Zeichnung im Detail beschrieben. In der Zeichnung zeigt:
- Figur 1: ein tiefgezogenes Gehäuse mit ringförmigem Magnet gemäß dem Stand der Technik, und
- Figur 2: ein Polgehäuse gemäß Ausführungsbeispiel.

### Ausführungsform der Erfindung

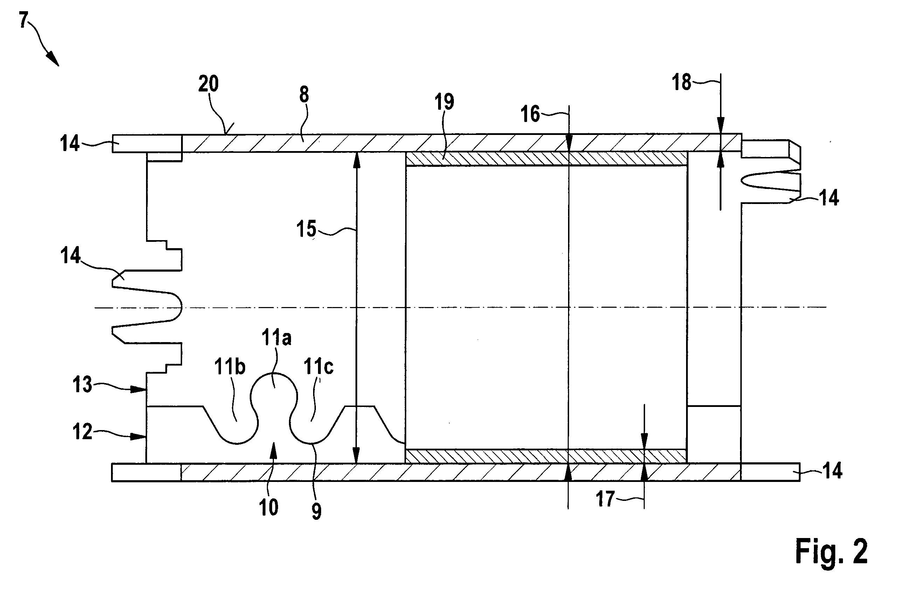

Im Folgenden wird anhand der Figur 2 ein Ausführungsbeispiel der Erfindung genauer erläutert. Figur 2 zeigt dabei ein Polgehäuse 7, wie es in einem Elektromotor zur Anwendung kommt. Das Polgehäuse 7 umfasst ein Polrohr 8 sowie einen dünnwandigen Ringmagneten 19. Die Mantelfläche des Polrohrs 8 wurde ursprünglich aus einem Stahlblech gestanzt und sodann zum Polrohr 8 zusammengerollt.

Der dünnwandige Ringmagnet 19 ist über eine der beiden Stirnseiten des Polrohrs 8 in das Polrohr 8 eingepresst.

Figur 2 zeigt des Weiteren einen Stoß 9, wie er durch Einrollen der Mantelfläche entstanden ist. Dabei stehen eine erste Seite 12 und eine zweite Seite 13 der Mantelfläche aneinander, so dass der Stoß 9 entsteht. An diesem Stoß 9 ist eine komplementäre Hinterschneidungen 10 ausgebildet. Die komplementäre Hinterschneidung 10 umfasst einen ersten Fortsatz 11a, einen zweiten Fortsatz 11b und einen dritten Fortsatz 11c. So zeigt die erste Seite 12 den ersten Fortsatz 11a und die zweite Seite 13 den zweiten Fortsatz 11 b sowie den dritten Fortsatz 11 c. Der zweite Fortsatz 11 b und der dritte Fortsatz 11 c umgreifen und hinterschneiden den ersten Fortsatz 11a, so dass die komplementäre Hinterschneidung 10 formschlüssig die erste Seite 12 mit der zweiten Seite 13 verbindet und somit die Mantelfläche im gerollten Zustand das Polrohr 8 geschlossen bleibt. Diese komplementäre Hinterscheidung 10 kann als puzzleförmige Ausgestaltung beschrieben werden. Entlang des Stoßes 9 können bevorzugt mehrere Hinterschneidungen 10 vorgesehen sein.

Des Weiteren weist das Polrohr 8 an seinen beiden Stirnseiten jeweils mehrere Anschlusselemente 14 auf. Diese Anschlusselemente 14 sind integral und einstückig mit dem Polrohr 8, so dass sie bereits bei dem Stanzvorgang der Mantelfläche des Polrohrs 8 entstanden sind. Die Stanzrichtung beim Stanzvorgang der Mantelfläche des Polrohrs 8, insbesondere inklusive der Anschlusselemente 14 und der Ausformung der komplementären Hinterschneidung 10, wurde so gewählt, dass der Grat, welcher bei der Stanzung entsteht, bei dem fertigen Polrohr 8 auf dessen Außenfläche 20 angeordnet ist. Dadurch ist der komplette innere Umfang des fertig gerollten Polrohrs 8 frei von jeglichem Grat.

Des Weiteren zeigt Figur 2 einen dritten Durchmesser 15 als lichten Innendurchmesser des Polrohrs 8 sowie einen vierten Durchmesser 16 als Außendurchmesser des dünnwandigen Ringmagneten 19. Anhand dieser Durchmesser 15, 16 ist sehr gut zu erkennen, dass ein Außenumfang des Ringmagneten 19 an einem Innenumfang des Polrohrs 8 anliegt. Des Weiteren zeigt Figur 2 eine erste Wandstärke 17 des dünnwandigen Ringmagneten 19 und eine zweite Wandstärke 18 des Polrohrs 8. Wobei der Ringmagnet 19 so dünn ausgeführt ist, dass seine erste Wandstärke 17 kleiner ist als die zweite Wandstärke 18 des Polrohrs 8.

Anhand des nun aufgezeigten Ausführungsbeispiels ist sehr gut zu erkennen, dass das erfindungsgemäße Polrohr 8 im Gegensatz zum tiefgezogenen Gehäuse 1 diverse Vorteile aufweist. So ist das Polrohr 8 mit nur einem durchgehend einheitlichen Innendurchmesser 15 gefertigt und trotzdem steht der Montage des Ringmagneten 19 kein Grat entgegen. Ferner entsteht durch das Rollen der gestanzten Mantelfläche eine sehr viel größere Flexibilität beim Design des gesamten Polgehäuses 7, da auf beiden Seiten des Polrohrs 8 individuell geformte Deckel und/oder Lagerdeckel aufgesetzt werden können. Insbesondere bietet sich hier der Einsatz von Kunststoffdeckeln und/oder Kunststofflagerdeckeln auf beiden Seiten an, was zur Gewichtsreduzierung des gesamten Elektromotors führt. Die Formgebung solcher Deckel und Lagerdeckel ist nicht durch einen nachteiligen Tiefziehprozess beeinflusst, sondern kann frei gestaltet werden.

## Patentansprüche

1. Verfahren zur Herstellung eines Elektromotors umfassend die folgenden Schritte:
- Bereitstellen einer Mantelfläche eines Polrohrs (8) des Elektromotors,
- Formen des Polrohrs (8) durch Einrollen der Mantelfläche, und
- Einsetzen eines dünnwandigen Ringmagneten (19) in das Polrohr (8), so dass ein Außenumfang des Ringmagneten (19) an einem Innenumfang des Polrohrs (8) anliegt,
**dadurch gekennzeichnet, dass** eine erste Wandstärke (17) des Ringmagneten (19) dünner ist als eine zweite Wandstärke (18) des Polrohrs (8), und die Mantelfläche durch Stanzen hergestellt wird, und eine Stanzrichtung so gesetzt ist, dass ein Grat lediglich an einer Außenseite des Polrohrs (8) entsteht.

2. Verfahren nach Anspruch 1, **dadurch gekennzeichnet, dass** das Pohlrohr (8) beidseitig offen ist und über seine gesamte Länge einen einheitlichen Innendurchmesser (15) aufweist.

3. Verfahren nach Anspruch 1, **dadurch gekennzeichnet, dass** das Polrohr (8) unterschiedliche Innendurchmesser aufweist.

4. Verfahren nach einem der vorhergehenden Ansprüche, **dadurch gekennzeichnet, dass** der dünnwandige Ringmagnet (19) eingepresst und/oder eingeklebt wird.

5. Verfahren nach einem der vorhergehenden Ansprüche, **dadurch gekennzeichnet, dass** die Mantelfläche derart gerollt wird, dass das Polrohr (8) auf Stoß (9), ohne Überlappung der Mantelfläche, geformt wird.

6. Verfahren nach Anspruch 5, **dadurch gekennzeichnet, dass** an den beiden, den Stoß (9) bildenden Seiten (12, 13) der Mantelfläche komplementäre Hinterschneidungen (10) für eine formschlüssige Verbindung der beiden Seiten (12, 13) ausgestanzt werden.

7. Verfahren nach einem der vorhergehenden Ansprüche, **dadurch gekennzeichnet, dass** aus der Mantelfläche zumindest ein stirnseitiges Anschlusselement (14) vor dem Einrollen ausgestanzt wird.

8. Verfahren nach einem der vorhergehenden Ansprüche, **dadurch gekennzeichnet, dass**, insbesondere beidseitig des Polrohrs (8), ein Deckel oder Lagerdeckel auf das Polrohr aufgesetzt wird.

9. Elektromotor ausgebildet als Verstellmotor zur Anwendung in der Kraftfahrzeugtechnik, hergestellt nach einem Verfahren gemäß einem der vorhergehenden Ansprüche.

## Claims

1. Method for producing an electric motor, comprising the following steps:
- preparing a casing surface of a pole tube (8) of the electric motor,
- forming the pole tube (8) by rolling in the casing surface, and
- inserting a thin-walled ring magnet (19) into the pole tube (8), so that an outer circumference of the ring magnet (19) bears against an inner circumference of the pole tube (8),
**characterized in that** a first wall thickness (17) of the ring magnet (19) is thinner than a second wall thickness (18) of the pole tube (8), and the casing surface is produced by punching, and a punching direction is set such that a burr is produced only on an outer face of the pole tube (8).

2. Method according to Claim 1, **characterized in that** the pole tube (8) is open on both sides and has a uniform inside diameter (15) over its entire length.

3. Method according to Claim 1, **characterized in that** the pole tube (8) has different inside diameters.

4. Method according to one of the preceding claims, **characterized in that** the thin-walled ring magnet (19) is pressed in and/or adhesively-bonded in.

5. Method according to one of the preceding claims, **characterized in that** the casing surface is rolled in such a way that the pole tube (8) is formed with an edge-to-edge joint (9), without the casing surface overlapping.

6. Method according to Claim 5, **characterized in that** complementary undercuts (10) for an interlocking connection of the two sides (12, 13) are punched out on the two sides (12, 13) of the casing surface which form the edge-to-edge joint (9).

7. Method according to one of the preceding claims, **characterized in that** at least one end-face connection element (14) is punched out of the casing surface before the rolling-in process.

8. Method according to one of the preceding claims, **characterized in that** a cover or bearing cover is mounted on the pole tube, in particular on both sides of the pole tube (8).

9. Electric motor in the form of an adjusting motor for use in motor-vehicle engineering, produced in line with a method according to one of the preceding claims.

## Revendications

1. Procédé de fabrication d'un moteur électrique, comprenant les étapes suivantes :
- fournir une surface d'enveloppe d'un tube polaire (8) du moteur électrique,
- former le tube polaire (8) par enroulement de la surface d'enveloppe, et
- insérer un aimant annulaire à paroi mince (19) dans le tube polaire (8), de sorte qu'une périphérie extérieure de l'aimant annulaire (19) s'applique contre une périphérie intérieure du tube polaire (8),
**caractérisé en ce qu'**une première épaisseur de paroi (17) de l'aimant annulaire (19) est plus mince qu'une deuxième épaisseur de paroi (18) du tube polaire (8) et la surface d'enveloppe est fabriquée par découpage, et une direction de découpage est fixée de telle sorte qu'une bavure se produise seulement au niveau d'un côté extérieur du tube polaire (8).

2. Procédé selon la revendication 1, **caractérisé en ce que** le tube polaire (8) est ouvert des deux côtés et présente, sur toute sa longueur, un diamètre intérieur unitaire (15).

3. Procédé selon la revendication 1, **caractérisé en ce que** le tube polaire (8) présente des diamètres intérieurs différents.

4. Procédé selon l'une quelconque des revendications précédentes, **caractérisé en ce que** l'aimant annulaire à paroi mince (19) est appliqué par pressage et/ou collage.

5. Procédé selon l'une quelconque des revendications précédentes, **caractérisé en ce que** la surface d'enveloppe est roulée de telle sorte que le tube polaire (8) soit formé bout-à-bout (9), sans chevauchement de la surface d'enveloppe.

6. Procédé selon la revendication 5, **caractérisé en ce que** des contre-dépouilles complémentaires (10) pour une connexion par engagement positif des deux côtés (12, 13) sont découpées au niveau des deux côtés (12, 13) de la surface d'enveloppe formant le joint d'aboutement (9).

7. Procédé selon l'une quelconque des revendications précédentes, **caractérisé en ce qu'**au moins un élément de raccordement du côté frontal (14) est estampé dans la surface d'enveloppe avant l'enroulement.

8. Procédé selon l'une quelconque des revendications précédentes, **caractérisé en ce qu'**un couvercle ou un couvercle de support est posé sur le tube polaire, en particulier des deux côtés du tube polaire (8).

9. Moteur électrique réalisé sous forme de moteur de réglage pour l'utilisation dans la technique automobile, fabriqué selon un procédé selon l'une quelconque des revendications précédentes.
